# EUROPEAN PATENT SPECIFICATION

(11) **EP 2 188 544 B1**
(45) Date of publication and mention of the grant of the patent: **14.08.2013**
(21) Application number: 08803069.7
(22) Date of filing: 15.08.2008
(51) Int. Cl.: F16D 63/00, B60T 1/10, F16D 57/00

(54) **BRAKING DEVICE AND METHOD**
BREMSVORRICHTUNG UND -VERFAHREN
DISPOSITIF ET PROCÉDÉ DE FREINAGE

(30) Priority: 16.08.2007 TR 200705658
(43) Date of publication of application: 26.05.2010
(73) Proprietor: Erke Erke Arastirmalari Ve Mühendislik A.S., 34303 Istanbul (TR)
(72) Inventor: ÖZTÜRK, Mustafa Naci, 34303 Istanbul (TR)
(74) Representative: Köhler, Walter
(86) International application number: PCT/EP2008/060778
(87) International publication number: WO 2009/022017

(56) References cited:
- EP-A1- 1 993 017
- EP-A2- 0 916 576
- BE-A- 382 285
- GB-A- 416 032
- US-A- 1 259 293
- US-A- 3 941 001
- US-A- 4 361 055
- US-A1- 2002 145 077

## Description

The present invention relates to a gyroscopic braking method.

### Background

Conventional braking systems rely on friction to reduce the kinetic energy of a vehicle or any other device to be slowed. Typically this is achieved via brake pads or shoes acting against a disk or drum. However, such conventional systems exhibit several disadvantages. In particular, the friction acting on the brake pads or shoes causes them to wear out and if they are not replaced in a timely manner then braking performance can suffer and ultimately damage to the brake disk or drum can occur. Furthermore, the friction relied upon by conventional braking systems generates large quantities of thermal energy, If such thermal energy is not carefully managed, the resulting temperatures can distort the brake components, thereby adversely affecting the braking performance. To mitigate this, braking systems can be provided with a cooling device, particularly in cases where a lot of heat is generated. However, with all conventional frictional braking systems, heat is dissipated which cannot be recovered and this is ultimately wasted energy.

In this regard, regenerative braking devices have sought to alleviate some of these issues. For example, electrical regenerative braking systems convert some of the kinetic energy into electrical energy which is then stored in batteries or capacitors. However, such systems are complex and additionally require electric motors/generators and batteries/capacitors, which are expensive and add to the weight of a vehicle (which may also in turn have a detrimental effect on a vehicle's performance). Alternatively, mechanical regenerative braking systems with a flywheel acting as an energy storage means can be used. However, the flywheels used in such systems are large and heavy and can also adversely affect the dynamics of the vehicle.

The present invention therefore seeks to address these issues.

### Statements of Invention

Accordingly it is desirable to provide a method which achieves braking without transforming kinetic energy to heat through friction, reduces environmental pollution, and to produce inexpensive, durable and safe braking systems.

According to a first aspect of the present invention, there is provided a method of braking according to claim 1.

According to the invention, there is provided a method of braking according using a braking device, comprising a body and a cradle, the method comprises the steps of: supporting the body in the cradle such that the body is constrained to rotate about a first axis, a second axis and a third axis, wherein the first axis is orientated with respect to the second axis at an inclination angle, both the first and third axes rotate about the second axis and rotation of the body about the third axis gives rise to a charge in the inclination angle; rotating the body about the first axis with one or more sources of motive power; connecting both the second and third axes to a same motion to be braked.

The method may comprise the additional step of controlling the magnitude of the braking force. The method may comprise the additional step of controlling the speed of rotation of the body about the first axis. The method may comprise the additional step of adjusting the range of the inclination angle,

The method may comprise the additional step of adjusting the transmission ratio of (A) the motion to be braked, to (B) the rotation of the body about at least one of the first, the second and third axes.

The method may comprise the additional step of changing the direction of the rotation of the body about the first axis or the second axis. The method may comprise the additional step of stopping the rotation of the body about the first axis.

The method may comprise the additional step of connecting the first axis, the second axis and the third axis to the source of motive power comprising the motion to be braked. The method may comprise the additional step of changing the direction of the rotation of the body about the third axis.

The braking device used in the inventive method may comprise one or more sources of motive power for rotating the body about the first axis. The one or more sources of motive power for rotating the body about the first axis may comprise the motion to be braked. The braking device may further comprise one or more sources of motive power for rotating the body about one of the second and third axes. The one or more sources of motive power for rotating the body about one of the second and third axes may comprise the motion to be braked. The braking device may further comprise one or more sources of motive power for rotating the body about the other of the second and third axes.

The one or more sources of motive power for rotating the body about the other of the second and third axes may comprise the motion to be braked.

The braking device used In the inventive method may comprise a connection means for connecting the motion to be braked to at least one of the second and third axes. The connection means may be direct or indirect and the connection means may comprise an inductive drive.

The braking device may further comprise one or more means for controlling the magnitude of the braking force The braking device may further comprise at least one means for controlling the transmission ratio of (A) the motion to be braked, to (B) the rotation of the body about at least one of the first, the second and third axes. The braking device may further comprise at least one means for adjusting the range of the inclination angle. The means for adjusting the range of the inclination angle may comprise a means for mechanically limiting the rotation of the body about the third axis in both senses between a lower and an upper limit angle values. The means for adjusting the range of the inclination angle may comprise a means for adjusting the lower and upper limit angle values during the operation of the braking device. The braking device may further comprise one or more means for controlling the speed of rotation of the body about the first axis.

The braking device used in the inventive method may comprise one or more means for preventing the body from resting at any position where the first axis and the second axis are substantially parallel or coincident. The braking device may further comprise one or more means for rotating the body about the third axis. The braking device may further comprise one or more means for changing the direction of the rotation of the body about the first axis. The braking device may further comprise one or more means for changing the direction of the rotation of the body about the second axis. The braking device may further comprise at least one means for stopping the rotation of the body about the second or third axes. The braking device may further comprise one or more means for changing the direction of the rotation of the body about the third axis.

The braking device used in the inventive method may further comprise one or more means for connecting both the second axis and the third axis to the motion to be braked. The means for connecting both the second axis and the third axis to the motion to be braked may comprise a fixed gear which is connected to the non-rotating part of the cradle and also coupled to a gear to which the third axis is connected.

The braking device used in the inventive method may further comprise one or more means for connecting the first axis, the second axis and the third axis to the motion to be braked.

The braking device used in the inventive method may comprise a controller with an automatic control unit that controls one or more of the speeds and directions of the rotation of the body about the first axis, the second axis and the third axis, magnitudes of the torque applied to the body about the first axis, the second axis and the third axis, the position of the body, and the range of the inclination angle.

A second braking device may be used in the inventive method, the bodies of the two braking devices rotating at substantially the same rotational speed about their first axes, and the cradles of the two braking devices being linked so that there may be a 90° phase difference between their respective inclination angles.

The third axis may be substantially perpendicular to both the first and the second axes. The first axis may substantially pass through the centre of mass of the body. The body may be arranged such that the moment of inertia of the body about the first axis is substantially maximised. The body may comprise a hub, a web and a ring shaped rim. The moment of inertia of the body may be higher than or equal to (M * R² / 2) where M is the mass of the body and R is the average radius of the body measured with respect to the first axis. The body may be made from a material with a modulus of elasticity exceeding 100 GPa.

The braking device used in the inventive method may comprise one or more sensors for measuring values of one or more of the following parameters: the rotation about the first axis and/or the second axis and/or the third axis, the angular velocity of the rotation about the first axis and/or the second axis and/or the third axis, the position of the body, the torque of the rotation about the first axis and/or the second axis and/or the third axis, a force, the speed and/or the torque of the motion to be braked.

The braking device used in the inventive method may comprise one or more means for controlling the magnitude of the braking force. The means for controlling the magnitude of the braking force may comprise at least one means for controlling the transmission ratio of (A) the motion to be braked, to (B) the rotation of the body about at least one of the first, the second and third axes. The means for controlling the magnitude of the braking force may comprise at least one means for adjusting the range of the inclination angle. The means for controlling the magnitude of the braking force may comprise one or more means for controlling the speed of rotation of the body about the first axis.

The braking device used in the inventive method may comprise one or more means for preventing the body from resting at any position where the first axis and the second axis are substantially parallel or coincident. The means for preventing the body from resting at any position where the first axis and the second axis are substantially parallel or coincident may comprise one or more means for rotating the body about the third axis. The means for preventing the body from resting at any position where the first axis and the second axis are substantially parallel or coincident may comprise one or more means for changing the direction of the rotation of the body about the first axis. The means for preventing the body from resting at any position where the first axis and second axis are substantially parallel or coincident may further comprise one or more means for changing the direction of the rotation of the body about the second axis.

### Brief Description of the Drawings

For a better understanding of the present invention, and to show more clearly how it may be carried into effect, reference will now be made, by way of example, to the following drawings, in which:
Figure 1 is a diagram illustrating the relative orientation of the axes of rotation of the braking device;
Figure 2 is a diagram illustrating the inclination angle (θ) between the first axis and the second axis;
Figure 3 is a schematic view of the braking device according to a first embodiment of the invention; and
Figure 4 is a schematic view of the braking device according to a fourth embodiment of the invention.

### Detailed Description of the Preferred Embodiment

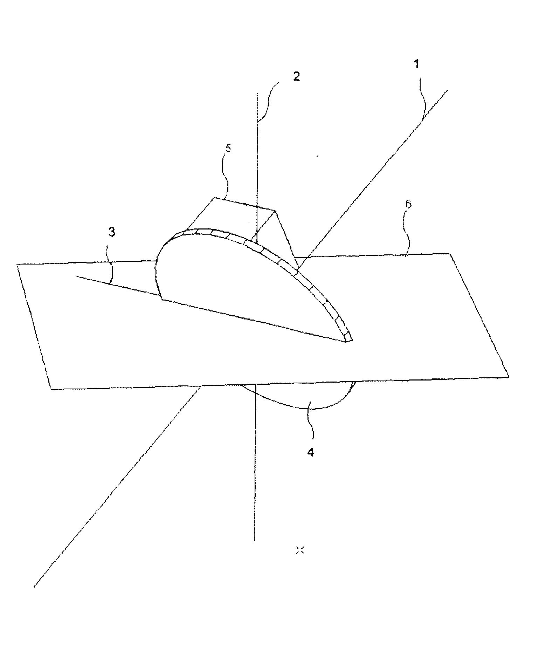

With reference to Figure 1, a body 4 is constrained to rotate about a first axis 1, a second axis 2 and a third axis 3. A cube 5 is used to illustrate the relative orientation of the axes and a plane 6 is used to illustrate more clearly the location of the body in space. Whilst the body 4 is depicted as a flat cylindrical disk, it is not necessary for the body to be so shaped. However, for ease of explanation and convenience, the body 4 is shown in the figures as a flat cylinder. Similarly, although it is not required for the second axis 2 to be vertical, it is shown as vertical in the figures in order to simplify the explanation of the invention.

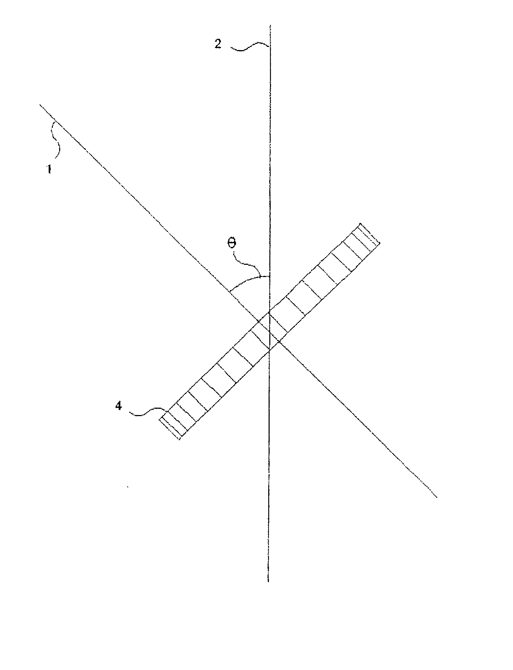

The first axis 1 is orientated with respect to the second axis 2 at an inclination angle θ as shown in Figure 2. The inclination angle θ determines the relative orientation of the first axis 1 and the second axis 2. The rotation of the body 4 about the third axis 3 gives rise to a change in the inclination angle θ. The third axis 3 may be substantially perpendicular to both the first axis 1 and the second axis 2.

Generally speaking, in geometry an angle is defined as the gap between two intersecting lines. However, it is not necessary for the first axis 1 and the second axis 2 to intersect in the present invention. If the first axis 1 and the second axis 2 do not intersect, then the inclination angle θ is defined as one of the angles between the first axis 1 and the second axis 2 when viewed along the direction of the shortest line joining the first axis 1 and the second axis 2. (An alternative way of expressing this geometric relationship is to consider a point on the first axis 1 and to consider an imaginary line which passes through this point and which is parallel to the second axis 2. The inclination angle θ is then defined as one of the angles at which the first axis 1 intersects this imaginary line.)

Before focusing on specific embodiments of the present invention, the principle of operation behind the present invention will now be explained. When a rotating body is acted on by a torque about an axis perpendicular to the axis of rotation, this causes the axis of rotation itself to rotate about a further axis which is perpendicular to both the axis of the applied torque and the axis of rotation. In the literature, this motion is called precession. In the present invention, whilst the body 4 rotates about the first axis 1, the body 4 may also rotate about the second axis 2 and/or the third axis 3. A motion to be braked may be connected to either the second axis 2 or the third axis 3. The axis to which the motion to be braked is connected may be called "the brake axis" and the other of the second or third axes may be called "the free motion axis". When the motion to be braked is connected to the brake axis, a torque becomes applied to the rotating body 4 to cause it to rotate about the brake axis. If the rotation of the body 4 about the free motion axis is allowed, as a result of both the rotation of the body 4 about the first axis 1 and the torque applied to the body about the brake axis, the body 4 starts rotating about the free motion axis as well. At the same time, the rotation of the body 4 about both the first axis 1 and the free motion axis constitutes a braking torque about the brake axis in the opposite direction to the motion to be braked. Thus, for the braking torque to be observed on the brake axis, the rotation of the body 4 about the free motion axis should be allowed whilst the following conditions are fulfilled: the body 4 is constrained to rotate about the first, the second and the third axes, the body 4 is rotated about the first axis 1 and the motion to be braked is connected to the brake axis. This braking effect may be used to brake any desired motion. When the first axis 1 and the second axis 2 are substantially parallel or coincident, the braking torque disappears.

The direction of the rotation of the body 4 about the free motion axis is determinable and the speed of this rotation is calculable. The braking effect could be increased by applying a torque to the body 4 about the free motion axis. The magnitude of the torque applied to the body 4 can be determined according to the direction and the speed of rotation of the body 4 about the free motion axis. In this way, the braking effect could be obtained on both the second axis 2 and the third axis 3 whilst the body 4 is rotated about all three axes.

The direction of the rotation of the body 4 about the free motion axis is determined by the direction of the rotation of the body 4 about the first axis 1 and the direction of the rotation of the body 4 about the brake axis. If the second axis 2 is the brake axis and the direction of the rotation of the body 4 about the first axis 1 is fixed, when the direction of the rotation of the body 4 about the second axis 2 is changed, the direction of the rotation of the body 4 about the third axis 3 changes. If the second axis 2 is the brake axis and the direction of the rotation of the body 4 about the second axis 2 is fixed, when the direction of the rotation of the body 4 about the first axis 1 is changed, the direction of the rotation of the body 4 about the third axis 3 changes.

Alternatively, if the third axis 3 is the brake axis and the direction of the rotation of the body 4 about the first axis 1 is fixed, when the direction of the rotation of the body 4 about the third axis 3 is changed, the direction of the rotation of the body 4 about the second axis 2 changes. If the third axis 3 is the brake axis and the direction of the rotation of the body 4 about the third axis 3 is fixed, when the direction of the rotation of the body 4 about the first axis 1 is changed, the direction of the rotation of the body 4 about the second axis 2 changes. If the third axis 3 is the brake axis, when the body 4 passes through the positions where the first axis 1 and the second axis 2 are substantially coincident or parallel, the direction of the rotation of the body 4 about the second axis 2 changes even though the directions of the rotations of the body 4 about the first and the third axes are fixed.

As long as the first axis 1 and the second axis 2 are substantially parallel or coincident, the braking effect is not obtained. Therefore, in order to obtain the braking effect the body 4 should be allowed to rotate about the free motion axis whilst providing that the first axis 1 and the second axis 2 are not substantially parallel or coincident. As long as the braking effect is desired, the body 4 should be prevented from resting at any position where the first axis 1 and the second axis 2 are substantially parallel or coincident. However, the body 4 may pass through these positions momentarily.

In order to prevent the body 4 from resting at any position where the first axis 1 and the second axis 2 are substantially parallel or coincident, the body 4 can be rotated about the third axis 3, or the direction of the rotation of the body 4 about one of the first axis 1 or the second axis 2 can be changed, or the axis which is connected to the motion to be braked can be changed between the second axis 2 and the third axis 3.

The magnitude of the braking force has been found to vary in dependence on the size and the shape of the body 4, the density of the material of the body 4, the density distribution of the body 4, the speed of rotation of the body 4 about the first axis 1, the second axis 2 and the third axis 3. The magnitude of the braking force increases when the body 4 gets close to the positions where the first axis 1 and the second axis 2 are perpendicular. The magnitude of the braking force decreases when the body 4 gets close to the positions where the first axis 1 and the second axis 2 are parallel or coincident. When the first axis 1 is perpendicular to the second axis 2, the magnitude of the braking force is the maximum. When the first axis 1 and the second axis 2 are parallel or coincident, the magnitude of the braking force is zero.

When the speed of rotation of the body 4 about the first axis 1 is increased, the magnitude of the braking force increases. When the speed of rotation of the body 4 about the first axis 1 is decreased, the magnitude of the braking force decreases. When the speed of rotation of the body 4 about the second axis 2 is increased, the magnitude of the braking force increases. When the speed of rotation of the body 4 about the second axis 2 is decreased, the magnitude of the braking force decreases. When the speed of rotation of the body 4 about the third axis 3 is increased, the magnitude of the braking force increases. When the speed of rotation of the body 4 about the third axis 3 is decreased, the magnitude of the braking force decreases.

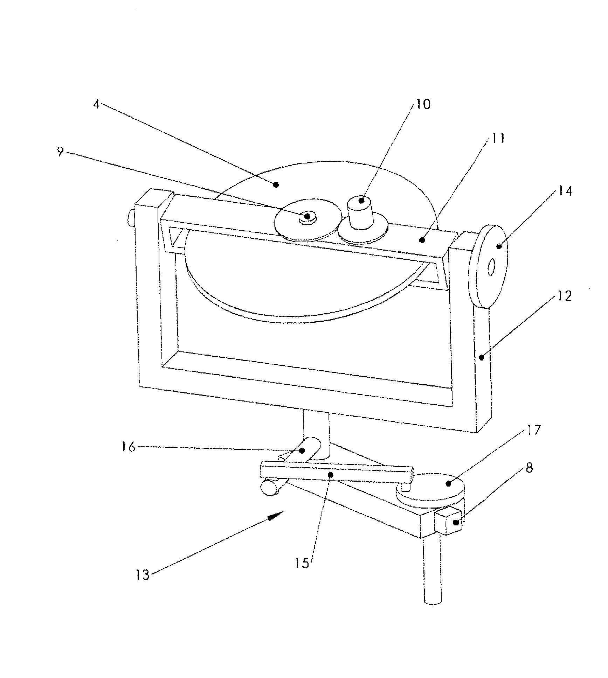

With reference to Figure 3, a braking device comprises the arrangement described above in relation to figures 1 and 2. Accordingly, the body 4 is constrained to rotate about the first axis 1, the second axis 2 and the third axis 3. The first axis 1 is orientated with respect to the second axis 2 at the inclination angle θ, whilst the third axis 3 is substantially perpendicular to both the first and second axes.

The main part of the braking device is the body 4. The body 4 comprises a hub and a web and a rim of ring shape in order to maximise the moment of inertia of the body 4. Accordingly, the moment of inertia of the body may be higher than or equal to (M * R² / 2) where M is the mass of the body and R is the average radius of the body measured with respect to the first axis. The average radius of a body measured with respect to a given axis is the average of the mean radii of the cross-sections with respect to the given axis which are obtained by intersecting the body with each plane that is perpendicular to the given axis. The body may also be made from a material with a modulus of elasticity exceeding 100 GPa.

A body shaft 9 is used to carry the body 4 and also to transfer the force to the body 4 for rotating the body 4 about the first axis 1. The body shaft 9 is supported by a first cradle 11 and the body 4 rotates about the first axis 1 within the first cradle 11. There is a first motor 10 on the body shaft 9 or connected to the body shaft 9 for rotating the body 4 about the first axis 1. The first motor 10 could be any kind for example a hydraulic motor or an electric motor etc. This motor is preferably fed with power from an external source. The first cradle 11 is supported within a second cradle 12 such that the first cradle 11 rotates about the third axis 3 within the second cradle 12. The second cradle 12 is also disposed to rotate about the second axis 2. This arrangement of the first cradle 11 and second cradle 12 allows the body 4 to rotate about the first, second and third axes in the manner previously described.

The shaft 9 of the body 4 is connected to the first cradle 11 by bearings. The first cradle 11 is connected by further bearings to the second cradle 12, which is in turn connected directly or indirectly to the motion to be braked. For example, the connection to the motion to be braked could comprise an inductive drive. The connection to the motion to be braked may also comprise a disengaging means, for example, a clutch.

The arrangement of the first cradle 11 allows it to be rotated such that the inclination angle θ could be changed. There is at least one structure 14 for preventing the change in the inclination angle θ and controlling the speed of rotation of the body 4 about the third axis 3. This structure 14 may comprise means for applying torque to the body 4 about the third axis 3. For example, one or more of a linear actuator, a source of motive power, and a passive piston cylinder could be used to apply torque to the body 4 about the third axis 3. The source of motive power may comprise a hydraulic motor, a pneumatic motor or an electric motor. The linear actuator may comprise a hydraulic system or a pneumatic system. By preventing rotation about the third axis 3, the structure 14 prevents the braking effect from occurring when it is not required.

In order to increase the efficiency of the braking device, an automatic control unit 8 is used to provide different operating conditions. Depending on the application area, the automatic control unit 8 gets different input signals from various sensors of the braking device and sets the parameters of the device such as the speeds and the directions of rotation of the body 4 about the first axis 1, the second axis 2 and the third axis 3, magnitudes of the torque applied to the body 4 about the first axis 1, the second axis 2 and the third axis 3, the position of the body 4, and the range of the inclination angle θ. The braking device may comprise a structure which adjusts the range of the inclination angle θ. The structure which adjusts the range of the inclination angle θ may comprise a means for mechanically limiting the rotation of the body 4 about the third axis 3 in both senses between a lower and an upper limit angle values and may further comprise a means for adjusting these angle values during the operation of the braking device for a chosen lower limit angle value and an upper limit angle value. The structure which adjusts the range of the inclination angle θ may comprise one or more of a source of motive power or a linear actuator used for rotating the body 4 about the third axis 3. The structure which adjusts the range of the inclination angle θ may also be controlled by adjusting the pressure of a fluid.

In addition to the above, there is a mechanism 13 for changing the direction of the rotation of the body 4 about the second axis 2. The mechanism 13 comprises a crank arm 15 which connects a first crank wheel 16 to a second crank wheel 17. The first crank wheel 16 is directly connected to the second axis 2, whilst the second crank wheel 17 is directly or indirectly connected to a motion to be braked. The second crank wheel 17 may be connected to the motion to be braked via a clutch mechanism and/or a further drive train with one or more transmission ratios. The magnitude of the braking force could be adjusted by adjusting the transmission ratio of the drive train, between the motion to be braked and the second and/or third axes. One end of the crank arm 15 is connected to an eccentric point on the first crank wheel 16, whilst the other end of the crank arm 15 is connected to an eccentric point on the second crank wheel 17. The respective eccentric points of connection are arranged such that a complete rotation of the second crank wheel 17 causes an oscillatory rotation in the first crank wheel 16. In this manner continuous rotation of the second crank wheel 17 (by the motion to be braked) causes the first crank wheel 16 (and hence the second axis 2) to oscillate, thereby changing the direction of rotation.

The operation of the braking device will now be explained. When the drive motor 10 is powered on, the motor rotates the body shaft 9, Thus, the body 4 is started to rotate about the first axis 1. Whilst the body 4 is being rotated about the first axis 1, it is also rotated about the second axis 2 by the motion to be braked. On condition that the first axis 1 and the second axis 2 are not substantially parallel or coincident, the body 4 starts to rotate about the third axis 3. As a result of the rotation of the body 4 about the third axis 3 combined with the rotation of the body 4 about the first axis 1, a braking effect occurs on the second axis 2 against the motion to be braked. For increasing the speed of rotation of the body 4 about the third axis 3, a source of motive power (not shown) connected to the third axis 3 is also used. The braking device also comprises means for connecting both the second axis and the third axis to the motion to be braked. The means for connecting both the second axis and the third axis to the motion to be braked may comprise a fixed gear which is connected to the non-rotating part of the cradle and also coupled to a gear to which the third axis is connected. Since the motion to be braked is also used to rotate the body 4 about the third axis 3 in order to increase the speed of rotation of the body 4 about the third axis 3, the braking effect is increased. Thus, the braking effect is increased on the second axis 2 and also a braking effect occurs on the third axis 3. If the speeds of rotation of the body 4 about the first axis 1, the second axis 2 and the third axis 3 are increased, the braking effect is also increased. In addition to this, by adjusting the transmission ratio of the motion to be braked to the rotation of the body 4 about the brake axis, the magnitude of the braking force could be adjusted. If the braking effect is not required, the rotation of the body 4 about the third axis 3 is not allowed. To keep the braking device always ready for braking, the body 4 can be kept rotated about the first axis 1 by the drive motor 10. In this way a braking force can be provided instantaneously when the braking effect is desired. When the motion to be braked is not engaged to the second crank wheel 17, in order to engage the motion to be braked to the second crank wheel 17 easily, the body 4 can be kept rotated about the second axis 2 by a source of motive power (not shown). In order to increase the efficiency of the braking device and to control the magnitude of the braking force, the speeds and the directions of rotation about the first axis 1, the second axis 2 and the third axis 3 are adjusted by the automatic control unit 8.

It is considered that the amount of power needed for the rotation of the body 4 about the first axis 1 is the amount that is sufficient to overcome the energy losses arising from friction due to the rotation of the body 4 about the first axis 1.

The braking effect on the motion to be braked could be removed using at least one of the following methods; (i) stopping the rotation of the body 4 about the first axis 1, (ii) preventing the rotation of the body 4 about the free motion axis, (iii) disengaging the motion to be braked and the braking device. The methods (i) and (ii) enable the braking effect to be removed whilst the motion to be braked is connected to the braking device.

In a further embodiment of a braking device not claimed herein, which is not shown in the figures, the third axis 3 is the brake axis, instead of the second axis 2. The second embodiment is otherwise similar to the first embodiment. For the same reasons as described above, whilst the body 4 is rotating about both the first axis 1 and the third axis 3, the body 4 starts to rotate about the second axis 2. As a result of the rotation of the body 4 about the second axis 2 combined with the rotation of the body 4 about the first axis 1, a braking effect occurs on the third axis 3 to which the motion to be braked is connected. The biggest difference between the first and second embodiments is that there is no problem regarding the position of the body 4 where the first axis 1 and the second axis 2 are substantially parallel or coincident since the motion to be braked is connected to the third axis 3. However, when the body 4 passes through a position where the first and the second axis 2 are substantially parallel or coincident, the direction of the rotation of the body 4 about the second axis 2 will change. But because of the inertia of the system there is a delay in changing the direction of rotation of the body 4 about the second axis 2. In order to eliminate the delay, preferably there is a structure to stop undesirable rotation of the body 4 about the second axis 2. This structure could be controlled by the automatic control unit, with for example an hydraulic system.

In a further embodiment of the braking device, a means for connecting both the second axis 2 and the third axis 3 to the motion to be braked is provided. The means for connecting both the second axis 2 and the third axis 3 to the motion to be braked comprises a fixed gear which is connected to the non-rotating part of the second cradle 12 and also coupled to a gear to which the third axis 3 is connected.

In a further alternative to this embodiment, one or more means for connecting the first axis 1, the second axis 2 and the third axis 3 to the motion to be braked are provided.

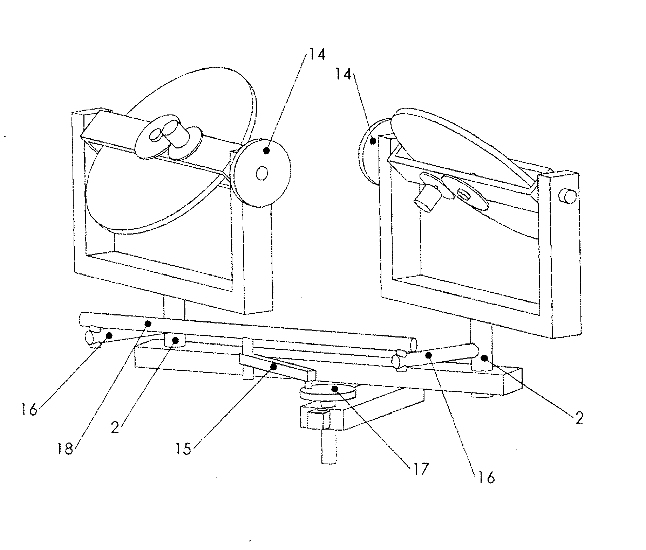

With reference to figure 4, an embodiment of a braking device not claimed herein comprises two braking devices. The two braking devices rotate at substantially the same rotational speed but operate at 90 degrees respective phase difference about the inclination angles θ. The two braking devices are linked together to maintain their phase difference. The structures 14 for preventing the change in the inclination angle θ and controlling the speed of rotation of the body 4 about the third axis 3 may be used to ensure that the inclination angles θ of the two braking devices are maintained at a 90 degrees phase difference.

The second axes 2 of the two braking devices are linked via an arm 18. A first end of the arm 18 is pivotally connected to a lever arm attached to the second axis of the first braking device, whilst a second end of arm 18 is pivotally connected to a lever arm attached to the second axis of the second braking device. The arm 18 is then pivotally connected to one end of the crank arm 15, whilst the other end of the crank arm 15 is connected to the second crank wheel 17. As for the first embodiment, the second crank wheel 17 is directly or indirectly connected to a motion to be braked. The second crank wheel 17 may be connected to the motion to be braked via a clutch mechanism and/or a further drive train with one or more transmission ratios, A complete rotation of the second crank wheel 17 causes a reciprocating motion of the arm 18 which in turn causes an oscillatory rotation of the first and second braking device about their respective second axes. In this manner continuous rotation of the second crank wheel 17 (by the motion to be braked) causes the first crank wheel 16 (and hence the second axis 2) to oscillate, thereby changing the direction of rotation. Connecting two braking devices together in such a fashion has the result of providing a continuous braking effect. This embodiment otherwise functions in the same fashion as the first embodiment described above.

## Claims

1. A method of braking using a braking device, comprislng a body (4) and a cradle (11, 12), the method comprises the steps of:
supporting the body (4) in the cradle (11, 12) such that the body (4) is constrained to rotate about a first axis (1), a second axis (2) and a third axis (3), wherein the first axis (1) is orientated with respect to the second axis (2) at an inclination angle (θ), both the first and third axes (1, 3) rotate about the second axis (2) and rotation of the body (4) about the third axis (3) gives rise to a change in the inclination angle (θ);
rotating the body (4) about the first axis (1) with one or more sources of motive power (10);
wherein
a) the second axis (2) is used as a brake axis to which a source of motive power comprising the motion to be braked is engaged and the third axis (3) is used as a free motion axis about which a rotation is allowed, or
b) the third axis (3) is used as a brake axis to which a source of motive power comprising the motion to be braked is engaged and the second axis (2) is used as a free motion axis about which a rotation is allowed,
whereby, when the motion to be braked is engaged to the brake axis, a torque becomes applied to the body (4) to cause it to rotate about the brake axis,
whereby, as a result of both the rotation of the body (4) about the first axis (1) and the torque applied to the body (4) about the brake axis, the body (4) starts rotating about the free motion axis as well, this motion being called precession, and at the same time, the rotation of the body (4) about both the first axis (1) and the free motion axis constitutes a braking torque about the brake axis in the opposite direction to the motion to be braked,
**characterized in that**
the method further comprises the step of: in case a) connecting the third axis (3) to the source of motive power comprising the motion to be braked to increase the speed of rotation of the body (4) around the third axis (3), and in case b) connecting the second axis (2) to the source of motive power comprising the motion to be braked to increase the speed of rotation of the body (4) around the second axis (2).

2. The method of braking as claimed in claim 1, wherein the method comprises the additional step of:
- controlling the magnitude of the braking force.

3. The method of braking as claimed in claim 1 or 2, wherein the method comprises the additional step of:
- controlling the speed of rotation of the body about the first axis.

4. The method of braking as claimed in any of the preceding claims, wherein the method comprises the additional step of:
- adjusting the range of the inclination angle.

5. The method of braking as claimed in any of the preceding claims, wherein the method comprises the additional step of:
- adjusting the transmission ratio of (A) the motion to be braked, to (B) the rotation of the body about at least one of the first, the second and third axes.

6. The method of braking as claimed in any one of the preceding claims, wherein the method comprises the additional step of:
- stopping the rotation of the body about the first axis.

7. The method of braking as claimed in any one of the preceding claims, wherein the method comprises the additional step of:
connecting the first axis, the second axis and the third axis to the source of motive power comprising the motion to be braked.

## Patentansprüche

1. Verfahren zum Bremsen unter Verwendung einer Bremsvorrichtung, die einen Körper (4) und ein Wiegegestell (11, 12) umfasst, wobei das Verfahren die folgenden Schritte umfasst:
Tragen des Körpers (4) in dem Wiegegestell (11, 12) derart, dass der Körper (4) darauf eingeschränkt ist, sich um eine erste Achse (1), um eine zweite Achse (2) und um eine dritte Achse (3) zu drehen, wobei die erste Achse (1) in Bezug auf die zweite Achse (2) unter einem Neigungswinkel (θ) orientiert ist, wobei sich sowohl die erste Achse als auch die dritte Achse (1, 3) um die zweite Achse (2) drehen und wobei die Drehung des Körpers (4) um die dritte Achse (3) Anlass zu einer Veränderung des Neigungswinkels (θ) gibt;
Drehen des Körpers (4) um die erste Achse (1) mit einer oder mehreren Quellen einer Antriebskraft (10);
wobei:
a) die zweite Achse (2) als eine Bremsachse verwendet wird, mit der eine Quelle einer Antriebskraft, die die zu bremsende Bewegung umfasst, in Eingriff ist, und wobei die dritte Achse (3) als eine freie Bewegungsachse verwendet wird, um die eine Drehung möglich ist, oder
b) die dritte Achse (3) als eine Bremsachse verwendet wird, mit der eine Quelle einer Antriebskraft, die die zu bremsende Bewegung umfasst, in Eingriff ist, und wobei die zweite Achse (2) als eine freie Bewegungsachse verwendet wird, um die eine Drehung möglich ist,
wobei dann, wenn die zu bremsende Bewegung mit der Bremsachse in Eingriff ist, ein Drehmoment auf den Körper (4) ausgeübt wird, um zu veranlassen, dass sich dieser um die Bremsachse dreht,
wobei, als ein Ergebnis sowohl der Bewegung des Körpers (4) um die erste Achse (1) als auch des auf den Körper (4) ausgeübten Drehmoments um die Bremsachse, der Körper (4) beginnt, sich um die freie Bewegungsachse ebenfalls zu drehen, wobei diese Bewegung Präzession genannt wird, und wobei zur selben Zeit die Drehung des Körpers (4) sowohl um die erste Achse (1) als auch um die freie Bewegungsachse ein Bremsdrehmoment um die Bremsachse in der Richtung, die der zu bremsenden Bewegung entgegengesetzt ist, erzeugt,
**dadurch gekennzeichnet, dass**
das Verfahren ferner den folgenden Schritt umfasst: im Fall a) Anschließen der dritten Achse (3) an die Quelle einer Antriebskraft, die die zu bremsende Bewegung umfasst, um die Drehgeschwindigkeit des Körpers (4) um die dritte Achse (3) zu erhöhen, und im Fall b) Anschließen der zweiten Achse (2) an die Quelle einer Antriebskraft, die die zu bremsende Bewegung umfasst, um die Drehgeschwindigkeit des Körpers (4) um die zweite Achse (2) zu erhöhen.

2. Verfahren zum Bremsen nach Anspruch 1, wobei das Verfahren den zusätzlichen Schritt umfasst:
- Steuern der Größe der Bremskraft.

3. Verfahren zum Bremsen nach Anspruch 1 oder 2, wobei das Verfahren den zusätzlichen Schritt umfasst:
- Steuern der Drehgeschwindigkeit des Körpers um die erste Achse.

4. Verfahren zum Bremsen nach einem der vorhergehenden Ansprüche, wobei das Verfahren den zusätzlichen Schritt umfasst:
- Anpassen des Bereiches des Neigungswinkels.

5. Verfahren zum Bremsen nach einem der vorhergehenden Ansprüche, wobei das Verfahren den zusätzlichen Schritt umfasst:
- Anpassen des Übertragungsverhältnisses (A) der zu bremsenden Bewegung zu (B) der Drehung des Körpers um die erste Achse und/oder um die zweite Achse und/oder um die dritte Achse.

6. Verfahren zum Bremsen nach einem der vorhergehenden Ansprüche, wobei das Verfahren den zusätzlichen Schritt umfasst:
- Beenden der Drehung des Körpers um die erste Achse.

7. Verfahren zum Bremsen nach einem der vorhergehenden Ansprüche, wobei das Verfahren den zusätzlichen Schritt umfasst:
- Anschließen der ersten Achse, der zweiten Achse und der dritten Achse an die Quelle einer Antriebskraft, die die zu bremsende Bewegung umfasst.

## Revendications

1. Procédé de freinage en utilisant un dispositif de freinage comprenant un corps (4) et un étrier (11, 12), le procédé comprenant les étapes de :
maintien du corps (4) dans l'étrier (11, 12) de telle sorte que le corps (4) est contraint de tourner autour d'un premier axe (1), d'un deuxième axe (2) et d'un troisième axe (3), dans lequel le premier axe (1) est orienté par rapport au deuxième axe (2) sous un angle d'inclinaison (θ), à la fois les premier et troisième axes (1, 3) tournent autour du deuxième axe (2) et la rotation du corps (4) autour du troisième axe (3) conduit à une variation sur l'angle d'inclinaison (θ) ;
entraînement en rotation du corps (4) autour du premier axe (1) avec une ou plusieurs sources d'énergie motrice (10) ;
dans lequel
a) le deuxième axe (2) est utilisé comme un axe de freinage sur lequel une source d'énergie motrice présentant le mouvement à freiner est couplée et le troisième axe (3) est utilisé comme un axe à mouvement libre autour duquel une rotation est autorisée, ou
b) le troisième axe (3) est utilisé comme un axe de freinage sur lequel une source d'énergie motrice présentant le mouvement à freiner est couplée et le deuxième axe (2) est utilisé comme un axe à mouvement libre autour duquel une rotation est autorisée,
de telle sorte que, lorsque le mouvement à freiner est couplé à l'axe de freinage, un couple est appliqué sur le corps (4) afin de l'amener à tourner autour de l'axe de freinage,
de telle sorte que, en résultat à la fois de la rotation du corps (4) autour du premier axe (1) et du couple appliqué sur le corps (4) autour de l'axe de freinage, le corps (4) commence de même à tourner autour de l'axe à mouvement libre, ce mouvement étant appelé mouvement de précession, et, simultanément, la rotation du corps (4) à la fois autour du premier axe (1) et de l'axe à mouvement libre constitue un couple de freinage autour de l'axe de freinage dans le sens opposé à celui du mouvement à freiner,
**caractérisé en ce que**
le procédé comprend en outre l'étape de : dans le cas a), liaison du troisième axe (3) à la source d'énergie motrice présentant le mouvement à freiner de manière à augmenter la vitesse de rotation du corps (4) autour du troisième axe (3), et dans le cas b), liaison du deuxième axe (2) à la source d'énergie motrice présentant le mouvement à freiner de manière à augmenter la vitesse de rotation du corps (4) autour du deuxième axe (2),

2. Procédé de freinage selon la revendication 1, dans lequel le procédé comprend l'étape supplémentaire de :
commande de l'intensité de l'effort de freinage.

3. Procédé de freinage selon la revendication 1 ou 2, dans lequel le procédé comprend l'étape supplémentaire de :
commande de la vitesse de rotation du corps autour du premier axe.

4. Procédé de freinage selon l'une quelconque des revendications précédentes, dans lequel le procédé comprend l'étape supplémentaire de:
réglage de la plage de variation de l'angle d'inclinaison.

5. Procédé de freinage selon l'une quelconque des revendications précédentes, dans lequel le procédé comprend l'étape supplémentaire de :
réglage du rapport de transmission de (A), le mouvement à freiner, sur (B), la rotation du corps autour d'au moins l'un du premier, du deuxième et du troisième axes.

6. Procédé de freinage selon l'une quelconque des revendications précédentes, dans lequel le procédé comprend l'étape supplémentaire de :
interruption de la rotation du corps autour du premier axe.

7. Procédé de freinage selon l'une quelconque des revendications précédentes, dans lequel le procédé comprend l'étape supplémentaire de :
couplage du premier axe, du deuxième axe et du troisième axe à la source d'énergie motrice présentant le mouvement à freiner.
